(19) Europäisches Patentamt
European Patent Office
Office européen des brevets

(11) EP 0 483 628 B1

(12) EUROPÄISCHE PATENTSCHRIFT

(45) Veröffentlichungstag und Bekanntmachung des Hinweises auf die Patenterteilung:
**29.05.1996 Patentblatt 1996/22**

(51) Int Cl.[6]: **C08L 69/00**
// (C08L69/00, 25:12, 51:04)

(21) Anmeldenummer: **91117884.6**

(22) Anmeldetag: **19.10.1991**

# (54) Chlor- und bromfreie, flammfeste thermoplastische Formmassen auf der Basis von Polycarbonaten und Styrol/Acrylnitril-Copolymerisaten

Flame-proof thermoplastic moulding compositions based on polycarbonates fee of chlorine or bromine, and copolymers of styrene and acrylonitrile

Matières moulables thermoplastiques non inflammables à base de polycarbonates exempt de chlore ou brome et copolymères de styrene et d'acrylnitrile

(84) Benannte Vertragsstaaten:
**BE DE FR GB NL**

(30) Priorität: **29.10.1990 DE 4034336**
**05.01.1991 DE 4100192**
**14.05.1991 DE 4115607**

(43) Veröffentlichungstag der Anmeldung:
**06.05.1992 Patentblatt 1992/19**

(73) Patentinhaber: **BASF Aktiengesellschaft**
**D-67063 Ludwigshafen (DE)**

(72) Erfinder:
- **Neumann, Rainer, Dr.**
  **W-6704 Mutterstadt (DE)**
- **Muehlbach,Klaus, Dr.**
  **W-6148 Heppenheim (DE)**
- **Ruppmich, Karl**
  **W-6700 Ludwigshafen (DE)**
- **Bueschl, Rainer, Dr.**
  **W-6701 Roedersheim-Gronau (DE)**
- **Seitz, Friedrich, Dr.**
  **W-6701 Friedelsheim (DE)**
- **Niessner,Norbert, Dr.**
  **W-6701 Friedelsheim (DE)**

(56) Entgegenhaltungen:
**EP-A- 0 286 965**
**EP-A- 0 287 895**
**EP-B- 0 186 250**
**DE-A- 3 442 281**
**DE-A- 3 523 316**
**DE-A- 3 824 356**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft chlor- und bromfreie, flammfeste thermoplastische Formmassen, enthaltend als wesentliche Komponenten

A) 40 bis 85,99 Gew.-% mindestens eines halogenfreien Polycarbonats

B) 5 bis 25 Gew.-% mindestens eines halogenfreien Pfropfpolymerisats, aufgebaut aus

$b_1$) 40 bis 80 Gew.-% einer Pfropfgrundlage aus einem kautschukelastischen Polymeren mit einer Glasübergangstemperatur von unter 0°C

$b_2$) 20 bis 60 Gew.-% einer Pfropfauflage aus

$b_{21}$) 50 bis 95 Gew.-% Styrol oder substituierten Styrolen der allgemeinen Formel I

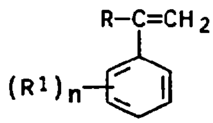

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder deren Mischungen und

$b_{22}$) 5 bis 50 Gew.-% Acrylnitril, Methacrylnitril, Methylmethacrylat, Maleinsäureanhydrid oder deren Mischungen

C) 5 bis 40 Gew.-% eines halogenfreien, thermoplastischen Copolymerisats aus

$c_1$) 50 bis 95 Gew.-% Styrol oder substituierten Styrolen der allgemeinen Formel I oder deren Mischungen

$c_2$) 5 bis 50 Gew.-% Acrylnitril, Methacrylnitril, Methylmethacrylat, Maleinsäureanhdyrid oder deren Mischungen

D) 4 bis 20 Gew.-% mindestens einer halogenfreien Phosphorverbindung der allgemeinen Formel II

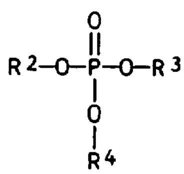

II

in der

$R^2$, $R^3$, $R^4$ unabhängig voneinander halogenfreie $C_1$- bis $C_8$-Alkylgruppen oder halogenfreie $C_6$- bis $C_{20}$-Arylgruppen, die ein- bis zweifach durch $C_1$- bis $C_4$-Alkylgruppen substituiert sein können

bedeuten

E) 0,01 bis 5 Gew.-% mindestens eines Perfluor- oder Polyfluoralkansulfonsäure- oder -carbonsäurederivats der allgemeinen Formel III

$$[F(CF_2-CF_2)_x(CH_2-CH_2)_y-X]_zM \qquad III$$

in der die Substituenten und Indices die folgende Bedeutung haben:

X -$SO_3$ oder -COO,

M Wasserstoffatom, Alkali- oder Erdalkalimetallatom,

x eine ganze Zahl von 1 bis 6,

y 0 oder 1 und

z der Wertigkeit von M entspricht

F) 0 bis 5 Gew.-% mindestens eines Tetrafluorethylenpolymerisats mit einer mittleren Teilchengröße von 0,05 bis 20 µm

G) 0 bis 40 Gew.-% faser- oder teilchenförmige Füllstoffe oder deren Mischungen.

Außerdem betrifft die Erfindung Verfahren zur Herstellung dieser thermoplastischen Formmassen, deren Verwendung zur Herstellung von Fasern, Folien und Formkörpern sowie die hierbei erhältlichen Formkörper aus den thermoplastischen Formmassen.

Chlor- und bromfreie, flammfeste thermoplastische Formmassen auf der Basis von Polycarbonaten und Styrol/Acrylnitril-Copolymerisaten finden aufgrund ihres Eigenschaftsprofils in den verschiedensten Bereichen Verwendung, beispielsweise im Automobilbau, im Bausektor, für Büromaschinen sowie in elektrischen Geräten und Haushaltsgeräten.

Die chlor- und bromfreie Flammfestausrüstung von thermoplastischen Formmassen auf der Basis von Polycarbonaten und Styrol/Acrylnitril-Copolymerisaten (ABS oder ASA) durch Zusatz von organischen Phosphorsäureestern und faserbildenden Tetrafluorethylenpolymerisaten wird beispielsweise in der DE-A 35 23 314, der DE-A 35 23 316, der DE-A 38 19 081 und der DE-A 36 28 904 beschrieben. Aus der DE-A 38 24 356, der EP-A 287 895 und der EP-A 286 965 ist gegebenenfalls die Zugabe von weiteren Halogenverbindungen zu diesen so flammfestausgerüsteten Formmassen bekannt.

Diese bekannten Mischungen weisen zwar eine gute flammhemmende Wirkung auf, jedoch sind ihre mechanischen Eigenschaften nicht zufriedenstellend.

In der DE-A 19 30 257, der DE-A 22 53 072, der DE-A 27 03 710 und der DE-A 34 25 122 werden Perfluoralkansulfonsäuren bzw. Perfluoralkancarbonsäuren und deren Derivate als flammhemmende Zusätze, meist in Kombination mit chlorierten oder bromierten Verbindungen, für Polycarbonate beschrieben. Diese Mischungen zeigen eine starke Abhängigkeit der Zähigkeit von der Probendicke.

Der Zusatz von Perfluoralkansulfonsäuren und ihren Derivaten zur Verbesserung der Kerbschlagzähigkeit von ABS-Formmassen wird in der EP-A 8733 abgehandelt. Solche Mischungen weisen jedoch keine brandwidrigen Eigenschaften auf.

Aus der DE-A 39 11 558 sind brandwidrige Formmassen auf der Basis von Dihydroxydiphenylcycloalkanen bekannt, deren Kerbschlagzähigkeiten sind jedoch nicht zufriedenstellend.

Der Erfindung lag daher die Aufgabe zugrunde, flammfeste thermoplastische Formmassen auf der Basis von Polycarbonaten und Styrol/Acrylnitril-Copolymerisaten zur Verfügung zu stellen, die die genannten Nachteile nicht aufweisen.

Die Aufgabe wird erfindungsgemäß gelöst durch die eingangs definierten chlor- und bromfreien, flammfesten thermoplastischen Formmassen gemäß Anspruch 1. Bevorzugte Ausführungsformen sind den Unteransprüchen zu entnehmen. Außerdem wurden Verfahren zur Herstellung dieser thermoplastischen Formmassen, deren Verwendung zur Herstellung von Fasern, Folien und Formkörpern sowie die hierbei erhältlichen Formkörper aus den thermoplastischen Formmassen gefunden.

Als Komponente A) enthalten die erfindungsgemäßen thermoplastischen Formmassen 40 bis 85,99 Gew.-%, vorzugsweise 50 bis 85 Gew.-% mindestens eines halogenfreien Polycarbonats.

Geeignete halogenfreie Polycarbonate sind beispielsweise solche auf Basis von Diphenolen der allgemeinen Formel V

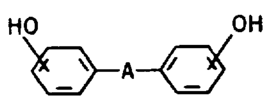

V

worin A eine Einfachbindung, eine $C_1$- bis $C_3$-Alkylen-, eine $C_2$- bis $C_3$-Alkyliden-, eine $C_3$- bis $C_6$-Cycloalkylidengruppe, sowie -S- oder -$SO_2$- bedeutet.

Bevorzugte Diphenole der Formel V sind beispielsweise Hydrochinon, Resorcin, 4,4'-Dihydroxybiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan.

Die Diphenole der allgemeinen Formel V sind an sich bekannt oder nach bekannten Verfahren herstellbar.

Bevorzugte halogenfreie Polycarbonate sind auch solche auf der Basis von Dihydroxydiphenylcycloalkanen der allgemeinen Formel IV

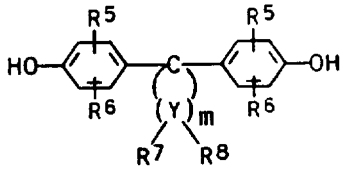

IV

in der die Substituenten und der Index die folgende Bedeutung haben:

$R^5$ und $R^6$ unabhängig voneinander Wasserstoffatome, halogenfreie $C_1$- bis $C_8$-Alkyl-, halogenfreie $C_5$- und $C_6$-Cycloalkylgruppen, halogenfreie $C_6$- bis $C_{10}$-Arylgruppen, die ein- bis zweifach durch $C_1$- bis $C_4$-Alkylgruppen substituiert sein können oder halogenfreie $C_7$- bis $C_{12}$-Aralkylgruppen

Y Kohlenstoffatom

$R^7$ und $R^8$ für jedes Y individuell wählbar, unabhängig voneinander Wasserstoffatome oder $C_1$- bis $C_6$-Alkylgruppen

m eine ganze Zahl von 4 bis 7

Als besonders geeignet haben sich Dihydroxydiphenylcycloalkane der allgemeinen Formel IV erwiesen, in denen die Reste $R^5$ und $R^6$ für Wasserstoffatome, $C_1$- bis $C_4$-Alkylgruppen, insbesondere Methyl- und Ethylgruppen, für Phenylgruppen oder einfach durch Methyl- oder Ethylgruppen substituierte Phenylgruppen oder für Phenyl-$C_1$- bis $C_4$-Alkylgruppen, insbesondere Benzyl, stehen. Grundsätzlich können die Reste $R^5$ und $R^6$ voneinander verschieden sein, jedoch hat es sich gezeigt, daß Verbindungen, in denen $R^5$ und $R^6$ die gleiche Bedeutung haben, bevorzugt sind. Insbesondere stehen $R^5$ und $R^6$ für Wasserstoffatome.

Bevorzugte Dihydroxydiphenylcycloalkane der allgemeinen Formel IV sind solche, bei denen an mindestens einem Atom Y $R^7$ und $R^8$ gleichzeitig eine Alkylgruppe, bevorzugt Methyl- oder Ethylgruppen, insbesondere Methylgruppen, bedeuten. Insbesondere bevorzugt sind an 1 bis 2 Atomen Y, insbesondere nur an einem Atom Y, $R^7$ und $R^8$ gleichzeitig Alkyl, bevorzugt Methyl. Die Y-Atome in $\alpha$-Stellung zu dem diphenylsubstituierten C-Atom sind bevorzugt nicht dialkylsubstituiert, dagegen ist die Alkyldisubstitution in $\beta$-Stellung zu dem diphenylsubstituierten C-Atom bevorzugt.

Besonders bevorzugte Dihydroxydiphenylcycloalkane der allgemeinen Formel IV sind solche, in denen m für 4 oder 5 steht, d.h. also Dihydroxydiphenylpentane oder -hexane der allgemeinen Formel IV.

Nachstehend seien einige besonders bevorzugte Verbindungen der allgemeinen Formel IV genannt:

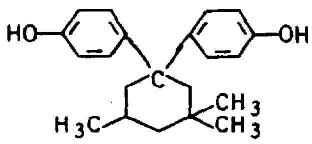

IVa

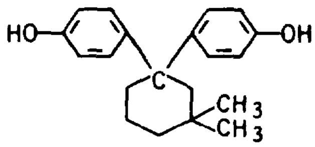

IVb

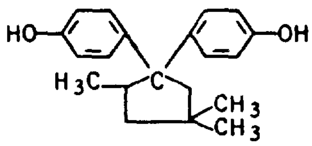

IVc

wobei das 1,1-Bis-(4-hydroxyphenyl)-3,3,5-trimethylcyclohexan (IVa) besonders bevorzugt ist.

Derartige Dihydroxydiphenylcycloalkane der allgemeinen Formel IV sind an sich bekannt, z.B. aus der DE-A 38 32 396, oder nach bekannten Verfahren herstellbar. So hat sich die Kondensation von Phenolen

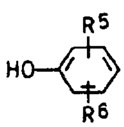

mit Ketonen

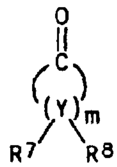

als besonders geeignet erwiesen. Wegen näherer Einzelheiten sei beispielsweise auf die DE-A 38 32 396 hingewiesen.

Zur Herstellung der halogenfreien Polycarbonate (Komponente A)) können sowohl ein Dihydroxydiphenylcycloalkan der allgemeinen Formel IV unter Bildung von Homopolycarbonaten als auch mehrere Dihydroxydiphenylcycloalkane der allgemeinen Formel IV unter Bildung von Copolycarbonaten verwendet werden.

Außerdem können die Dihydroxydiphenylcycloalkane der allgemeinen Formel IV auch im Gemisch mit anderen Diphenolen zur Herstellung von halogenfreien Polycarbonaten verwendet werden, beispielsweise mit Diphenolen der allgemeinen Formel V.

Die Diphenole der allgemeinen Formel V können sowohl einzeln als auch im Gemisch zur Herstellung der Komponente A) verwendet werden.

Das molare Verhältnis von Dihydroxydiphenylcycloalkanen der allgemeinen Formel IV zu den gegebenenfalls mitverwendeten Diphenolen der allgemeinen Formel V liegt im Bereich von 100 mol-% IV zu 0 mol-% V bis 2 mol-% IV zu 98 mol-% V, bevorzugt im Bereich von 100 mol-% IV zu 0 mol-% V bis 5 mol-% IV zu 95 mol-% V, vorzugsweise im Bereich von 100 mol-% IV zu 0 mol-% V bis 20 mol-% IV zu 80 mol-% V, insbesondere im Bereich von 70 mol-% IV zu 30 mol-% V bis 30 mol-% IV zu 70 mol-% V.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten Mw (Gewichtsmittelwert) von 10 000 bis 200 000, vorzugsweise von 20 000 bis 80 000.

Die Herstellung der Polycarbonate kann beispielsweise durch Umsetzung der Diphenole der allgemeinen Formel V und/oder der Dihydroxydiphenylcycloalkane der allgemeinen Formel IV mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782.)

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie beispielsweise p-Nonylphenol, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als Komponente B) enthalten die erfindungsgemäßen thermoplastischen Formmassen 5 bis 25 Gew.-%, vorzugsweise 5 bis 20 Gew.-% mindestens eines halogenfreien Pfropfpolymerisats, aufgebaut aus

$b_1$) 40 bis 80 Gew.-%, vorzugsweise 50 bis 70 Gew.-% einer Pfropfgrundlage aus einem kautschukelastischen Polymeren mit einer Glasübergangstemperatur von unter 0°C

$b_2$) 20 bis 60 Gew.-%, vorzugsweise 30 bis 50 Gew.-% einer Pfropfauflage aus

$b_{21}$) 50 bis 95 Gew.-%, bevorzugt 60 bis 80 Gew.-% Styrol oder substituierten Styrolen der allgemeinen Formel I oder deren Mischungen

$b_{22}$) 5 bis 50 Gew.-%, vorzugsweise 20 bis 40 Gew.-% Acrylnitril, Methacrylnitril, Methylmethacrylat, Maleinsäureanhydrid oder deren Mischungen.

Für die Pfropfgrundlage $b_1$) kommen Polymerisate in Frage, deren Glasübergangstemperatur unterhalb von 0°C, vorzugsweise unterhalb von -20°C liegt. Dies sind z.B. Naturkautschuk, Synthesekautschuk auf der Basis von konjugierten Dienen, ggf. mit anderen Copolymeren sowie Elastomere auf der Basis von $C_1$- bis $C_8$-Alkylestern der Acrylsäure, die ggf. ebenfalls 5 weitere Comonomere enthalten können.

Bevorzugt kommen als Pfropfgrundlage $b_1$) Polybutadien (vgl. DE-A 14 20 775 und DE-A 14 95 089) und Copolymerisate aus Polybutadien und Styrol (vgl. GB-A 649 166) in Betracht.

Weiterhin sind Pfropfgrundlagen $b_1$) bevorzugt, die aufgebaut sind aus

$b_{11}$) 70 bis 99,9 Gew.-%, vorzugsweise 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat

$b_{12}$) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether

$b_{13}$) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren.

Als solche bi- oder polyfunktionellen Vernetzungsmonomeren $b_{13}$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Auch diese Art von Pfropfgrundlagen ist an sich bekannt und in der Literatur beschrieben, beispielsweise in der DE-A 31 49 358.

Von den Pfropfauflagen $b_2$) sind diejenigen bevorzugt, in denen $b_{21}$) Styrol oder α-Methylstyrol bedeutet. Als bevorzugte Monomeren-Gemische werden vor allem Styrol und Acrylnitril, α-Methylstyrol und Acrylnitril, Styrol, Acrylnitril und Methylmethacrylat, Styrol und Maleinsäureanhydrid eingesetzt. Die Pfropfauflagen sind erhältlich durch Copolymerisation der Komponenten $b_{21}$) und $b_{22}$).

Für den Fall, daß das Pfropfpolymerisat B) eine Pfropfgrundlage $b_1$) enthält, die aus Butadienpolymeren aufgebaut ist, so spricht man von ABS-Kautschuken.

Die Pfropfmischpolymerisation kann wie z.B. aus der DE-A 31 49 358 bekannt in Lösung, Suspension oder vorzugsweise in Emulsion erfolgen. Die Weichphase des Pfropfmischpolymerisats Weist, bei der bevorzugten Herstellung des ABS-Kautschuks und der Pfropfung in Emulsion, einen mittleren Teilchendurchmesser ($d_{50}$-Wert der integralen Masseverteilung) von 0,08 μm auf. Durch Vergrößerung der Teilchen, z.B. durch Agglomeration oder bei der Gewinnung der Emulsion im Wege des Saatlatex-Verfahrens, wird der $d_{50}$-Wert im Bereich von 0,2 bis 0,5 μm eingestellt. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenden Doppelbindungen erfolgt. Zumindest ein Teil der Monomeren ist also auf den Kautschuk gepfropft, also durch kovalente Bindungen an den Kautschuk-Fadenmolekülen gebunden.

Die Pfropfung kann auch mehrstufig erfolgen, indem zuerst ein Teil der die Pfropfhülle bildenden Monomere aufgepfropft wird und anschließend der Rest.

Ist die Pfropfgrundlage $b_1$) der Pfropfpolymerisate B) aus den Komponenten $b_{11}$), gegebenenfalls $b_{12}$) und $b_{13}$) aufgebaut, so spricht man von ASA-Kautschuken. Ihre Herstellung ist an sich bekannt und beispielsweise in der DE-A 28 26 925, der DE-A 31 49 358 und der DE-A 34 14 118 beschrieben.

Die Herstellung des Pfropfmischpolymerisats B kann beispielsweise nach der in der DE-PS 12 60 135 beschriebenen Methode erfolgen.

Der Aufbau der Pfropfauflage (Pfropfhülle) des Pfropfmischpolymerisats kann ein- oder zweistufig erfolgen.

Im Falle des einstufigen Aufbaues der Pfropfhülle wird ein Gemisch der Monomeren $b_{21}$) und $b_{22}$) in dem gewünschten Gew.-Verhältnis im Bereich von 95:5 bis 50:50, vorzugsweise von 90:10 bis 65:35 in Gegenwart des Elastomeren $b_1$, in an sich bekannter Weise (vgl. z.B. DE-OS 28 26 925), vorzugsweise in Emulsion, polymerisiert.

Im Falle eines zweistufigen Aufbaus der Pfropfhülle $b_2$) macht die 1. Stufe im allgemeinen 20 bis 70 Gew.-%, vorzugsweise 25 bis 50 Gew.-%, bezogen auf $b_2$), aus. Zu ihrer Herstellung werden vorzugsweise nur monoethylenisch-ungesättigte aromatische Kohlenwasserstoffe ($b_{21}$) verwendet.

Die 2. Stufe der Pfropfhülle macht im allgemeinen 30 bis 80 Gew.-%, insbesondere 50 bis 75 Gew.-%, jeweils bezogen auf $b_2$), aus. Zu ihrer Herstellung werden Mischungen aus den genannten monoethylenisch ungesättigten aromatischen Kohlenwasserstoffen $b_{21}$) und monoethylenisch ungesättigten Monomeren $b_{22}$) im Gewichtsverhältnis

$b_{21})/b_{22})$ von im allgemeinen 90:10 bis 60:40, insbesondere 80:20 bis 70:30 angewendet.

Die Bedingungen der Pfropfmischpolymerisation werden vorzugsweise so gewählt, daß Teilchengrößen von 50 bis 700 nm ($d_{50}$-Wert d. integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfmischpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfmischpolymerisate ist vorzugsweise derselbe, obwohl die Hülle des grobteiligen Pfropfmischpolymerisates insbesondere auch zweistufig aufgebaut werden kann.

Mischungen aus der Komponente A und B, wobei letztere ein grob- und ein feinteiliges Pfropfmischpolymerisat aufweist, sind z.B. in der DE-OS 36 15 607 beschrieben. Mischungen aus der Komponente A und B, wobei letztere eine zweistufige Pfropfhülle aufweist, sind aus EP-A 111 260 bekannt.

Als Komponente C) enthalten die erfindungsgemäßen thermoplastischen Formmassen 5 bis 40 Gew.-%, vorzugsweise 5 bis 30 Gew.-% eines halogenfreien, thermoplastischen Copolymerisats aus

$c_1$) 50 bis 95 Gew.-%, vorzugsweise 60 bis 80 Gew.-% Styrol oder substituierten Styrolen der allgemeinen Formel I oder deren Mischungen

$c_2$) 5 bis 50 Gew.-%, vorzugsweise 20 bis 40 Gew.-% Acrylnitril, Methacrylnitril, Methylmethacrylat, Maleinsäureanhydrid oder deren Mischungen.

Die Copolymerisate C) sind harzartig, thermoplastisch und kautschukfrei. Besonders bevorzugte Copolymerisate C) sind solche aus Styrol mit Acrylnitril und gegebenenfalls mit Methylmethacrylat, aus $\alpha$-Methylstyrol mit Acrylnitril und gegebenenfalls mit Methylmethacrylat oder aus Styrol und $\alpha$-Methylstyrol mit Acrylnitril und gegebenenfalls mit Methylmethacrylat und aus Styrol und Maleinsäureanhydrid. Es können auch mehrere der beschriebenen Copolymere gleichzeitig eingesetzt werden.

Solche Copolymerisate entstehen häufig bei der Pfropfpolymerisation zur Herstellung der Komponente B) als Nebenprodukte, besonders dann, wenn große Mengen Monomere auf kleine Mengen Kautschuk gepfropft werden.

Die Copolymerisate C) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten $\overline{M}_W$ (Gewichtsmittelwert) von 40 000 bis 2 000 000.

Die als Komponente D) eingesetzten halogenfreien Phosphorverbindungen der allgemeinen Formel II sind in den erfindungsgemäßen thermoplastischen Formmassen in einer Menge von 4 bis 20 Gew.-%, vorzugsweise 4 bis 15 Gew.-% vorhanden.

Bevorzugt sind Verbindungen, in denen mindestens zwei der Reste $R^2$, $R^3$ und $R^4$ gleich sind. Die Verwendung von aromatischen Phosphaten, insbesondere von Phosphaten der allgemeinen Formel II, in denen die Reste für Phenyl- und Kresylgruppen, die ihrerseits auch ein- bis zweifach, vorzugsweise durch Methyl-, Ethyl- und Isopropylgruppen substituiert sein können, stehen, ist bevorzugt.

Als besonders geeignete Phosphorverbindungen der allgemeinen Formel II lassen sich beispielsweise Tri-(2,6-dimethylphenyl)-phosphat, Triphenylphosphat, Trikresylphosphat, Diphenyl-2-ethyl-kresylphosphat, Diphenyl-kresylphosphat und Tri-(isopropylphenyl)-phosphat nennen.

Um eine erhöhte Vicat-Temperatur in den Mischungen einzustellen, können auch Mischungen der obengenannten Phosphate mit beispielsweise Triphenylphosphinoxid oder Tri-(2,6-dimethylphenyl)-phosphinoxid eingesetzt werden.

Weiterhin ist der Zusatz der in der DE-A 38 24 356 genannten Phosphate wie Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-phenyl-bis-[1-phenylethyl)-phenyl]-ester, Phosphorsäure-phenyl-bis-[1-methyl-1-phenylethyl)-phenyl]-ester und Phosphorsäure-phenyl-bis-[4-(1-phenylethyl)-2,6-dimethylphenyl]-ester zur Erhöhung der Vicat-Temperatur der Mischungen geeignet.

Die erfindungsgemäß geeigneten halogenfreien Phosphorverbindungen D) sind generell bekannt (siehe beispielsweise Ullmann, Enzyklopädie der technischen Chemie, Bd. 18, S. 301ff, 1979, Houben-Weyl, Methoden der organischen Chemie, Bd. 12/1, S. 43, S. 136; Beilstein, Bd. 6, S. 177).

Als Komponente E) enthalten die erfindungsgemäßen thermoplastischen Formmassen 0,01 bis 5 Gew.-%, vorzugsweise 0,01 bis 2 Gew.-% mindestens eines Perfluor- oder Polyfluoralkansulfonsäure- oder -carbonsäurederivats der allgemeinen Formel III

$$[F{-}(CF_2{-}CF_2)_x{-}(CH_2{-}CH_2)_y{-}X]_zM \qquad III$$

in der die Substituenten und Indices die folgende Bedeutung haben:

X -$SO_3$ oder -COO,

M Wasserstoffatom, Alkali- oder Erdalkalimetallatom,

x eine ganze Zahl von 1 bis 6,

y 0 oder 1 und

z der Wertigkeit von M entspricht.

Bedingt durch das Herstellverfahren werden üblicherweise Mischungen von Fluorverbindungen der allgemeinen Formel III mit unterschiedlichen Kettenlängen eingesetzt.

Die Herstellung dieser Fluorverbindungen der allgemeinen Formel III kann durch anodische Fluorierung in wasserfreier Flußsäure bei Spannungen, die noch nicht zur Freisetzung von elementarem Fluor führen, aus den entsprechenden aliphatischen Carbon- oder Sulfonsäuren nach dem Simons-verfahren, wie bei Meußdoerffer u. Niederprüm, Chemiker-Ztg. 104 (1980) S. 42-52 beschrieben, erfolgen. In diesem Falle werden perfluorierte Produkte mit y=0 und einheitlicher Kettenlänge erhalten.

Bevorzugt ist die Herstellung der Fluorverbindungen der allgemeinen Formel III über eine Telomerisation von Tetrafluorethylen mit Perfluoralkyljodiden. Hierbei entstehen Gemische mit unterschiedlicher ($CF_2$-$CF_2$)-Kettenlänge. Die Jodide werden dann üblicherweise in einer Radikalreaktion zu den entsprechenden perfluprierten Sulfonsäuren umgesetzt und man erhält Produkte, in denen y den Wert Null annimmt.

Zur Herstellung der polyfluorierten Verbindungen, in denen y den Wert Eins annimmt, können die Perfluoralkyljodide mit Ethylen zur Reaktion gebracht werden und anschließend zu den entsprechenden Sulfon- bzw. Carbonsäuren umgesetzt werden.

Die Umsetzung zu den metallhaltigen Verbindungen erfolgt durch Reaktion mit äquimolaren Mengen an Alkali- oder Erdalkalimetallbasen oder -carbonaten in an sich bekannter Weise. Von den Alkali- und Erdalkalimetallatomen sind $Na^+$, $K^+$, $Mg^{2+}$ und $Ca^{2+}$ besonders bevorzugt.

Entsprechende Verbindungen und ihre Herstellung sind dem Fachmann bekannt und kommerziell erhältlich, beispielsweise unter den Handelsnamen Forafac® (ATOCHEM), Zonyl® (Du Pont) oder Fluorad (3M).

Als Komponente F) können die erfindungsgemäßen thermoplastischen Formmassen 0 bis 5 Gew.-%, vorzugsweise 0 bis 2 Gew.-% Tetrafluorethylenpolymerisate enthalten.

Geeignete Tetrafluorethylenpolymerisate weisen i.a. Fluorgehalte von 65 bis 76 Gew.-%, vorzugsweise 70 bis 76 Gew.-% auf. Beispiele hierfür sind Polytetrafluorethylen, Tetrafluorethylen-Hexafluorpropylen-Copolymere, Tetrafluorethylen-Perfluoralkylvinylether-Copolymere und Tetrafluorethylencopolymerisate mit geringen Mengen, vorzugsweise 0,1 bis 50 Gew.-% an fluorfreien copolymerisierbaren ethylenisch ungesättigten Monomeren wie Ethylen, Propylen und Butylen.

Mischungen verschiedener Tetrafluorethylenpolymerisate können ebenfalls eingesetzt werden.

Die in wäßrigen Dispersionen vorliegenden Tetrafluorethylenpolymerisate haben mittlere Teilchengrößen (Gewichtsmittel) von 0,05 bis 20 µm, vorzugsweise 0,08 bis 10 µm und eine Dichte von 1,2 bis 1,9 $g/cm^3$, insbesondere 1,3 bis 1,8 $g/cm^3$.

Entsprechende Verbindungen und ihre Herstellung sind an sich bekannt und beispielsweise in der US-A 2 393 967 beschrieben.

Die Polymerisation von Tetrafluorethylen ist an sich bekannt und z.B. in Houben-Weyl, Methoden der organischen Chemie, Bd. E20, S. 1028 bis 1041, beschrieben.

Als Komponente G) können die erfindungsgemäßen thermoplastischen Formmassen bis zu 40 Gew.-%, insbesondere 0,05 bis 30 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel, Phosphorstabilisatoren und Antistatika werden üblicherweise in Mengen von 0,01 bis 5 Gew.-% verwendet, Verstärkungsmittel wie Kohlenstoffasern und Glasfasern hingegen von 5 bis 40 Gew.-%.

Besonders bevorzugt als Komponente G) sind Kohlenstoffasern und insbesondere Glasfasern.

Die verwendeten Glasfasern können aus E-, A- oder C-Glas sein und sind vorzugsweise mit einer Schlichte und

einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen genannt. Insbesondere kommen Al-Flocken (K 102 der Fa. Transmet) für EMI-Zwecke (electromagnetic interference) in Betracht; ferner Abmischen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder ABS oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Die Herstellung der erfindungsgemäßen thermoplastischen Formmassen erfolgt durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A) bis F) und die Zusätze der Gruppe G) sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A), B), C), D), E) und gegebenenfalls F) und G) kann nach allen bekannten Methoden erfolgen. Vorzugsweise geschieht jedoch das Mischen der Komponenten A), B), C), D), E) und gegebenenfalls F) und G) bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die Komponente E) kann auch z.B. als Pulver oder in Form einer wäßrigen Lösung direkt in die Schmelze der Komponenten A), B), C), D) und gegebenenfalls F) und G) eingebracht werden. Im Falle des Einbringens in Form einer wäßrigen Lösung wird das Wasser über eine Entgasungseinheit aus der Mischvorrichtung, bevorzugt einem Extruder, entfernt. Bevorzugt wird die Komponente E) in die Schmelze der Komponente C) eingebracht.

In einer besonders bevorzugten Ausführungsform wird ein Konzentrat aus Pfropfkautschuk B) und Fluorverbindung E) (batch) hergestellt. Dazu wird das Pfropfpolymerisat (Komponente B)) in Gegenwart der Fluorverbindungen (Komponente E)) in Emulsion hergestellt oder die Fluorverbindungen E) werden der mit Alkylseifen, wie Oleate, Stearate, Alkylcarboxylate, Alkylsulfonate und Alkylarylsulfonate stabilisierten wäßrigen Dispersion des Pfropfpolymerisats zugesetzt. Hierbei können die Fluorverbindungen E) nach Herstellung der Pfropfgrundlage $b_1$) oder auch erst nach durchgeführter Pfropfung mit Pfropfauflage $b_2$) der Emulsion zugesetzt werden. Nach anschließender Isolierung mittels Sprühtrocknung oder durch Fällen mit einer wäßrigen Salzlösung, beispielsweise wäßriger Aluminiumsulfat- oder Magnesiumsulfatlösung wird das Wasser abgetrennt, und das Produkt getrocknet. Zu dem so erhaltenen Produkt, das aus den Komponenten B) und E) besteht, werden dann die übrigen Komponenten A), C), D) und gegebenenfalls F) und G) gegeben.

Eine weitere bevorzugte Ausführungsform besteht darin, daß die Komponente F) in Form einer wäßrigen Dispersion zu einer wäßrigen Dispersion der Komponente B) gegeben wird, diese Mischung koaguliert, gefällt, entwässert und getrocknet wird und anschließend die übrigen Komponenten zugegeben werden. Hierbei ist es auch möglich, in die wäßrige Dispersion der Komponente F) die Komponente E) einzubringen.

Ferner besteht ein besonders bevorzugtes Verfahren darin, daß eine wäßrige Dispersion der Komponente F) in die Schmelze der Komponente C) eingebracht wird, vorzugsweise in einem Extruder, und dann das Wasser über eine Entgasungseinheit entfernt wird. Auch hierbei kann die Komponente E) der Komponente F) zugemischt werden. Die übrigen Komponenten werden anschliepend zugegeben.

Als Mischaggregate für die Durchführung der erfindungsgemäßen Verfahren sind beispielsweise übliche Taumelmischer oder Rührwerksmischer zu nennen.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Für die Schmelzextrusion sind beispielsweise Ein- und Zweiwellenextruder besonders geeignet.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen thermoplastischen Formmassen weisen gute mechanische bei guten brandhemmenden Eigenschaften auf.

Beispiele

Die mittlere Teilchengröpe und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.

Es wurden folgende Komponenten eingesetzt:

A1) Ein Polycarbonat auf der Basis von 1,1-Bis-(4-hydroxyphenyl)-3,3,5-trimethylcyclohexan (IVa) und Bisphenol A im Molverhältnis 1:1 sowie Phosgen mit einer Grenzviskosität von 1,25 dl/g (gemessen an einer 0,5 gew.-%igen Lösung in Dimethylformamid bei 23°C) und einer Glasübergangstemperatur von 196°C.

A2) Ein handelsübliches Polycarbonat auf der Basis von Bisphenol A mit einer relativen Lösungsviskosität $\eta_{rel}$ von 1,3 ml/g, gemessen an einer 0,5 gew.-%igen Lösung in Methylenchlorid bei 23°C.

B1) Ein feinteiliges Pfropfmischpolymerisat, hergestellt aus

ß$_1$) 16 g Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).

ß$_2$) 150 g des nach ß$_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.

B2) Ein grobteiliges Pfropfmischpolymerisat, das folgendermaßen hergestellt wurde:

ß$_3$) Zu einer Vorlage aus 1,5 g des nach ß$_1$) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).

ß$_4$) 150 g des nach ß$_3$) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

B3) Ein Pfropfmischpolymerisat, hergestellt durch Polymerisation von 60 g Butadien in Gegenwart einer Lösung von 0,6 g tert.-Dodecylmercaptan, 0,7 g $C_{14}$-Na-Alkylsulfonat als Emulgator, 0,2 g Kaliumperoxodisulfat und 0,2 g Natriumpyrophosphat in 80 g Wasser bei 65°C. Nach Beendigung der Reaktion wurde der Polymerisationsautoklav entspannt. Der Umsatz betrug 98 %.

Es wurde ein Polybutadienlatex erhalten, dessen mittlere Teilchengröße bei 0,1 µm lag. Dieser wurde durch Zusatz von 25 g einer Emulsion aus einem Copolymeren aus 96 g Ethylacrylat und 4 g Methacrylsäureamid mit einem Feststoffgehalt von 10 Gewichtsteilen agglomeriert, wobei ein Polybutadienlatex mit einer mittleren Teilchengröße von 0,35 µm entstand. Nach dem Zusatz von 40 g Wasser, 0,4 g Na-$C_{14}$-Alkylsulfonat und 0,2 g Kaliumperoxodisulfat wurden 40 g einer Mischung aus Styrol und Acrylnitril im Gewichtsverhältnis von 70:30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

$PM_1$) Ein Pfropfmischpolymerisat analog zu B1), wobei anstelle von 1 g des Natriumsalzes einer $C_{12}$- bis $C_{18}$-Paraffinsulfonsäure 1 g der Komponente E1) verwendet wurde. Man erhielt ein Pfropfmischpolymerisat mit einem $d_{50}$-Wert von 110 nm.

$PM_2$) Ein Pfropfmischpolymerisat analog zu B3), wobei nach dem Agglomerieren anstelle von 0,4 g des Natriumsalzes eines $C_{14}$-Alkylsulfonats 1 g der Komponente E2) zugesetzt wurde.

$PM_3$) Ein Pfropfmischpolymerisat, das folgendermaßen hergestellt wurde:

Zu 5 kg des bei der Herstellung von B2) erhaltenen grobteiligen Butylacrylat-Latex wurden vor der Fällung 240 g der Komponente E4) zugegeben. Anschließend wurde wie unter ß$_4$) beschrieben gefällt und getrocknet.

$PM_4$) Ein Pfropfmischpolymerisat analog zu B6), wobei anstelle von 240 g der Komponente E4) 130 g der Komponente E3) zugegeben wurden.

$PM_5$) Ein Pfropfmischpolymerisat analog zu B6), wobei anstelle von 240 g der Komponente E4) 110 g der Komponente E1) zugegeben wurden.

$PM_6$) Ein Pfropfmischpolymerisat analog zu B6), wobei anstelle von 240 g der Komponente E4) 180 g der Komponente E2) zugegeben wurden.

C1) Ein Copolymerisat aus Styrol und Acrylnitril im Gew.-Verhältnis 80:20 mit einer Viskositätszahl von 83 ml/g, hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

C2) Ein Copolymerisat aus α-Methylstyrol und Acrylnitril im Gewichtsverhältnis 70:30 mit einer Viskositätszahl von 58 ml/g, ebenfalls durch kontinuierliche Lösungspolymerisation wie bei C1) beschrieben, hergestellt.

Die Viskositätszahl (VZ) der Copolymerisate C) wurde in einer 0,5 gew.-%igen Lösung in Dimethylformamid bei 23°C bestimmt.

D1) Triphenylphosphat

D2) Tri-(2,6-dimethylphenyl)-phosphat

E1) Pulverförmige Kaliumperfluoralkylsulfonate der Struktur

$$CF_3{-}CF_2{-}(CF_2{-}CF_2)_x{-}SO_3^{\ominus}K^{\oplus}$$

mit x = 2 oder 3 oder 4 (Fluorad® FC 95 der Fa. 3M)

E2) Kaliumfluoralkylcarboxylat als 50 gew.-%ige Lösung in einem 1:1:1 Gemisch von Wasser/Ethanol/Butylglykol mit der Struktur

$$CF_3{-}CF_2{-}(CF_2{-}CF_2)_x{-}CH_2{-}CH_2{-}COO^{\ominus}K^{\oplus}$$

mit x = 2 oder 3 oder 4 (Fluorad® FC 129 der Fa. 3M)

E3) Pulverförmiges Kaliumperfluoralkylsulfonat der Struktur

$$CF_3{-}CF_2{-}(CF_2{-}CF_2)_x{-}CH_2{-}CH_2{-}SO_3^{\ominus}K^{\oplus}$$

mit x = 2 oder 3 (Forafac® 1176 der Fa. ATOCHEM)

E4) Kaliumfluoralkylcarboxylat als 40 gew.-%ige Lösung in einem 1:1 Gemisch von Wasser und Ethanol mit der Struktur

$$CF_3{-}CF_2{-}(CF_2{-}CF_2)_x{-}CH_2{-}CH_2{-}COO^{\ominus}K^{\oplus}$$

mit x = 2 oder 3 (Forafac® 1119 der Fa. ATOCHEM)

$M_1$) Eine koagulierte Mischung aus einem Tetrafluorethylenpolymerisat und B2), die folgendermaßen hergestellt wurde:

1,2 Gew.-% einer Teflon-Dispersion mit einem Feststoffgehalt von 10 Gew.-%, einer Dichte des gesinterten Feststoffs von 2,23 g/$cm^3$ und einer Teilchengröße von 0,23 µm (Typ 30N der Fa. Du Pont) wurden mit 98,8 Gew.-% der Emulsion von B2) vermischt und mit 0,4 Gew.-%, bezogen auf Polymerfeststoff, phenolischer Antioxidantien stabilisiert. Bei 85 bis 95°C wurde die Mischung mit einer wäßrigen Lösung von $MgSO_4$ (Bittersalz) koaguliert, filtriert und bis zur praktischen Elektrolytfreiheit gewaschen, anschließend durch Zentrifugation von der Hauptmenge Wasser befreit und danach bei 100°C zu einem Pulver getrocknet.

$M_2$) Ein Tetrafluorethylenpolymerisat in einem Styrol-Acrylnitril-Copolymerisat, das folgendermaßen hergestellt wurde:

In einem Zweiwellenextruder der Fa. Werner & Pfleiderer wurde das Styrol/Acrylnitril-Copolymere C1) aufgeschmolzen und die unter $M_1$) beschriebene Teflon-Dispersion in die Schmelze eingepumpt. Entlang des Extruders wurde das Wasser abgezogen. Die Schmelze wurde als Strang ausgepreßt, durch ein Wasserbad gezogen und granuliert. Das Granulat enthielt 2 Gew.-% Teflon.

Beispiele 1 bis 33 Herstellung der thermoplastischen Formmassen

Die Komponenten wurden in trockener Form auf einem Fluidmischer gemischt und bei 260°C auf einem Doppelschneckenextruder (ZSK 30 der Fa. Werner & Pfleiderer) extrudiert. Hieraus wurden die erforderlichen Testkörper durch Spritzguß bei 250°C hergestellt.

Vergleichsbeispiele V1 bis V12

Es wurde wie in den Beispielen 1 bis 33 gearbeitet.

Die Kerbschlagzähigkeit $a_k$ [kJ/$m^2$] wurde nach DIN 53 453 an Stäben der Abmessungen 50 mm x 6 mm x 4 mm bei 23°C bestimmt, wobei die Stäbe mit einer rechteckigen Kerbe von 1,3 mm Tiefe und 2 mm Breite versehen waren.

Die Bestimmung der Wärmeformbeständigkeit erfolgte durch die Vicat-Erweichungstemperaturen nach der Methode B/50 (DIN 53 460) an Stäben der Abmessungen 50 mm x 6 mm x 4 mm.

Die Durchstoßarbeit Wg [Nm] wurde nach DIN 53 443 an bei 250°C gespritzten, 2 mm dicken Rundscheiben mit einem Durchmesser von 60 mm bei einer Prüftemperatur von -40°C bestimmt.

Die Flammschutzprüfung erfolgte im vertikalen Brandtest nach den Vorschriften der Underwriter Laboratories. Als

Testkörper wurden Brandstäbe mit $1/_{16}$" Dicke verwendet. Ein Satz von 5 Proben der Abmessungen 127 mm x 12,7 mm x 1,7 mm wurde je zweimal für 10 Sekunden mit einer offenen Flamme (Flammenhöhe 19 mm) beflammt. Bei allen Proben wurde die Nachbrenndauer bei jeder Beflammung gemessen. Als Gesamtbrandzeit tges wurde die Summe der Nachbrennzeiten dieser insgesamt 10 Beflammungen bezeichnet.

Die Ergebnisse sind in der Tabelle zusammengestellt.

Tabelle

| | Beispiele | | | | | | | | | |
|---|---|---|---|---|---|---|---|---|---|---|
| Zusammensetzung [Gew.-%] | 1 | 2 | 3 | 4 | 5 | 6 | 7 | 8 | 9 | 10 |
| A1 | 65 | 65 | 65 | 65 | 65 | 65 | 65 | 65 | 65 | 65 |
| A2 | | | | | | | | | | |
| B1 | | | 4 | | | | | | | 4 |
| B2 | | | 4 | | | | | | | 4 |
| B3 | | | | | | | | | | |
| **$PM_1$** | | | | 8 | | | | | | |
| **$PM_2$** | | | | | 8 | | | | 8 | |
| **$PM_3$** | 8 | 8 | | | | 8 | | | | |
| **$PM_4$** | | | | | | | 7 | | | |
| **$PM_5$** | | | | | | | | 8 | | |
| **$PM_6$** | | | | | | | | | | |
| C1 | 6 | 8 | 8,7 | 9 | | | 8 | 6 | 17 | 14,47 |
| C2 | | | | | 7,4 | 7 | | | | |
| D1 | 11 | 9 | 8 | 10 | 9 | 10 | | 11 | 10 | 12,5 |
| D2 | | | | | | | 10 | | | |
| E1 | | | | | 0,6 | | | | | 0,03 |
| E3 | | | 0,3 | | | | | | | |
| **$M_1$** | | | | | | | | | | |
| **$M_2$** | 10 | 10 | 10 | 8 | 10 | 10 | 10 | 10 | | |
| $a_k$ [kJ/m$^2$] | 35 | 31 | 31 | 30 | 28 | 27 | 33 | 38 | 31 | 29 |
| Vicat [°C] | 126 | 130 | 131 | 132 | 130 | 131 | 140 | 125 | 130 | 119 |
| Wg [Nm] | | | | | | | | | | |
| tges [sec] | 23 | 22 | 37 | 20 | 19 | 37 | 68 | 31 | 240 | 110 |

Tabelle - Forts.

| | Beispiele | | | | | | | | | |
|---|---|---|---|---|---|---|---|---|---|---|
| Zusammensetzung [Gew.-%] | 11 | 12 | 13 | 14 | 15 | 16 | 17 | 18 | 19 | 20 |
| A1 | | | | | | | | | | |
| A2 | 65 | 65 | 65 | 65 | 65 | 65 | 65 | 65 | 65 | 65 |
| B1 | | | | 4 | | | | | | |
| B2 | | | | 4 | | | | | | |
| B3 | | | | | | | | | | |
| **$PM_1$** | | | | | 8 | | | | | |
| **$PM_2$** | | | | | | 8 | | | | |
| **$PM_3$** | 8 | 8 | 8 | | | | | | 8 | |
| **$PM_4$** | | | | | | | 7 | | | 8 |
| **$PM_5$** | | | | | | | | 8 | | |
| **$PM_6$** | | | | | | | | | | |
| C1 | 6 | 8 | | 8,7 | 9 | 8 | 8 | 6 | 14,5 | 14,5 |

Fortsetzung der Tabelle auf der nächsten Seite

Tabelle - Forts. (fortgesetzt)

| Beispiele | | | | | | | | | | |
|---|---|---|---|---|---|---|---|---|---|---|
| Zusammensetzung [Gew.-%] | 11 | 12 | 13 | 14 | 15 | 16 | 17 | 18 | 19 | 20 |
| C2 | | | 7 | | | | | | | |
| D1 | 11 | 9 | 10 | 8 | 10 | 9 | | 11 | 12,5 | 12,5 |
| D2 | | | | | | | 10 | | | |
| E1 | | | | 0,3 | | | | | | |
| E3 | | | | | | | | | | |
| **$M_1$** | | | | | | | | | | |
| **$M_2$** | 10 | 10 | 10 | 10 | 8 | 10 | 10 | 10 | | |
| $a_k$ [kJ/m$^2$] | 30 | 27 | 21 | 28 | 27 | 25 | 29 | 33 | | |
| Vicat [°C] | 90,6 | 94,4 | 97,2 | 97,1 | 93,1 | 94,6 | 107,4 | 90,2 | | |
| Wg [Nm] | | | | | | | | | 55 | 57 |
| tges [sec] | 40 | 21 | 19 | 131 | 32 | 140 | 120 | 27 | 77 | 100 |

Tabelle - Forts.

| Beispiele | | | | | | | | | | |
|---|---|---|---|---|---|---|---|---|---|---|
| Zusammensetzung [Gew.-%] | 21 | 22 | 23 | 24 | 25 | 26 | 27 | 28 | 29 | 30 |
| A1 | | | | | | | | | | |
| A2 | 65 | 65 | 65 | 65 | 65 | 65 | 65 | 65 | 65 | 65 |
| B1 | | | 3,99 | | | | | | 4 | 4 |
| B2 | | | | | | 7,98 | 8 | | 4 | 4 |
| B3 | | | | | | | | 8 | | |
| **$PM_1$** | | | | | | | | | | |
| **$PM_2$** | | | | 8 | 8 | | | | | |
| **$PM_3$** | | | 4 | | | | | | | |
| **$PM_4$** | | | | | | | | | | |
| **$PM_5$** | 8 | | | | | | | | | |
| **$PM_6$** | | 8 | | | | | | | | |
| C1 | 14,5 | 14,5 | 14,5 | 14,5 | 17 | 14,5 | 14,1 | 14,1 | | 14,47 |
| C2 | | | | | | | | | 13 | |
| D1 | 12,5 | 12,5 | 12,5 | 12,5 | 10 | 12,5 | 12,5 | 12,5 | | 12,5 |
| D2 | | | | | | | | | 13,5 | |
| E1 | | | 0,01 | | | | 0,4 | 0,4 | | 0,03 |
| E3 | | | | | | 0,02 | | | 0,5 | |
| **$M_1$** | | | | | | | | | | |
| **$M_2$** | | | | | | | | | | |
| $a_k$ [kJ/m$^2$] | | | | | 24 | | | | | 17 |
| Vicat [°C] | | | | | 88,9 | | | | | 83,6 |
| Wg [Nm] | 71 | 72 | 74 | 67 | | 65 | 55 | 67 | 54 | |
| tges [sec] | 94 | 88 | 90 | 115 | 180 | 90 | 58 | 119 | 94 | 215 |

Tabelle - Forts.

| Beispiele | | | | | | | | | | |
|---|---|---|---|---|---|---|---|---|---|---|
| Zusammensetzung [Gew.-%] | 31 | 32 | 33 | V1 | V2 | V3 | V4 | V5 | V6 | V7 |
| A1 | | | 65 | 65 | 65 | 65 | 65 | | | |
| A2 | 70 | 65 | | | | | | 65 | 65 | 65 |
| B1 | | | | | | | | | | |
| B2 | | | | 8 | 8 | 8 | 8 | 8 | 8 | 8 |
| B3 | | | | | | | | | | |
| **$PM_1$** | 10 | | | | | | | | | |
| **$PM_2$** | | | | | | | | | | |
| **$PM_3$** | | | | | | | | | | |
| **$PM_4$** | | | | | | | | | | |
| **$PM_5$** | | | | | | | | | | |
| **$PM_6$** | | | | | | | | | | |
| C1 | 5 | 14,8 | 14,8 | 14,5 | 6,5 | 10 | 7 | 6,5 | 10 | 7 |
| C2 | | | | | | | | | | |
| D1 | 14 | 11 | 11 | 12,5 | 12,5 | 9 | 9 | 12,5 | 9 | 9 |
| D2 | | | | | | | | | | |
| E1 | 1 | | | | | | | | | |
| E3 | | 0,2 | 0,2 | | | | | | | |
| **$M_1$** | | 9 | 9 | | | | | | | |
| **$M_2$** | | | | | 8 | 8 | 11 | 8 | 8 | 11 |
| $a_k$ [kJ/m$^2$] | | 29 | 34 | 20 | 21 | 38 | 20 | 16 | 33 | 19 |
| Vicat [°C] | | 90,2 | 123 | 120 | 120 | 130 | 130 | 82,4 | 92,6 | 92,4 |
| Wg [Nm] | 60 | | | | | | | | | |
| tges [sec] | 88 | 23 | 20 | 81 | 33 | * | * | 21 | * | * |

* keine Einstufung möglich, da das Produkt zu wening flammfest war

Tabelle - Forts.

| Beispiele | | | | | |
|---|---|---|---|---|---|
| Zusammensetzung [Gew.-%] | V8 | V9 | V10 | V11 | V12 |
| A1 | | | | | |
| A2 | 65 | 65 | 65 | 65 | 65 |
| B1 | | | | 4 | |
| B2 | 8 | | | 4 | |
| B3 | | | 8 | 8 | |
| **$PM_1$** | | | | | |
| **$PM_2$** | | | | | |
| **$PM_3$** | | | | | |
| **$PM_4$** | | | | | |
| **$PM_5$** | | | | | |
| **$PM_6$** | | | | | |
| C1 | 14,5 | 9,5 | 14,5 | 14,5 | 14,5 |
| C2 | | | | | |
| D1 | 12,5 | 12,5 | 12,5 | 12,5 | 12,5 |
| D2 | | | | | |

Fortsetzung der Tabelle auf der nächsten Seite

Tabelle - Forts. (fortgesetzt)

| Beispiele | | | | | |
|---|---|---|---|---|---|
| Zusammensetzung [Gew.-%] | V8 | V9 | V10 | V11 | V12 |
| E1 | | | | | |
| E3 | | | | | |
| **$M_1$** | | | | 8 | |
| **$M_2$** | | 5 | | | |
| $a_k$ [kJ/$m^2$] | 14 | | | | |
| Vicat [°C] | 83,8 | | | | |
| Wg [Nm] | 48 | 33 | 55 | 60 | 17 |
| tges [sec] | 185 | 85 | * | 210 | 49 |

* keine Einstufung möglich, da das Produkt zu wening flammfest war

**Patentansprüche**

**1.** Chlor- und bromfreie, flammfeste thermoplastische Formmassen, enthaltend als wesentliche Komponenten

A) 40 bis 85,99 Gew.-% mindestens eines halogenfreien Polycarbonats

B) 5 bis 25 Gew.-% mindestens eines halogenfreien Pfropfpolymerisats, aufgebaut aus

$b_1$) 40 bis 80 Gew.-% einer Pfropfgrundlage aus einem kautschukelastischen Polymeren mit einer Glasübergangstemperatur von unter 0°C

$b_2$) 20 bis 60 Gew.-% einer Pfropfauflage aus

$b_{21}$) 50 bis 95 Gew.-% Styrol oder substituierten Styrolen der allgemeinen Formel I

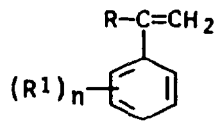

I

wobei R einen Alkylrest mit 1 bis 8 C-Atomen oder ein Wasserstoffatom und $R^1$ einen Alkylrest mit 1 bis 8 C-Atomen darstellen und n den Wert 0, 1, 2 oder 3 hat oder deren Mischungen und

$b_{22}$) 5 bis 50 Gew.-% Acrylnitril, Methacrylnitril, Methylmethacrylat, Maleinsäureanhydrid oder deren Mischungen

C) 5 bis 40 Gew.-% eines halogenfreien, thermoplastischen Copolymerisats aus

$c_1$) 50 bis 95 Gew.-% Styrol oder substituierten Styrolen der allgemeinen Formel I oder deren Mischungen

$c_2$) 5 bis 50 Gew.-% Acrylnitril, Methacrylnitril, Methylmethacrylat, Maleinsäureanhdyrid oder deren Mischungen

D) 4 bis 20 Gew.-% mindestens einer halogenfreien Phosphorverbindung der allgemeinen Formel II

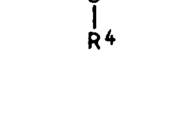

II

in der

$R^2$, $R^3$, $R^4$ unabhängig voneinander halogenfreie $C_1$- bis $C_8$-Alkylgruppen oder halogenfreie $C_6$- bis $C_{20}$-Arylgruppen, die ein- bis zweifach durch $C_1$- bis $C_4$-Alkylgruppen substituiert sein können

bedeuten

E) 0,01 bis 5 Gew.-% mindestens eines Perfluor- oder Polyfluoralkansulfonsäure- oder -carbonsäurederivats der allgemeinen Formel III

$$[F(CF_2-CF_2)_x(CH_2-CH_2)_y-X]_zM \qquad III$$

in der die Subtituenten und Indices die folgende Bedeutung haben:

X -$SO_3$ oder -COO,

M Wasserstoffatom, Alkali- oder Erdalkalimetallatom,

x eine ganze Zahl von 1 bis 6,

y 0 oder 1 und

z der Wertigkeit von M entspricht

F) 0 bis 5 Gew.-% mindestens eines Tetrafluorethylenpolymerisats mit einer mittleren Teilchengröße von 0,05 bis 20 µm

G) 0 bis 40 Gew.-% faser- oder teilchenförmige Füllstoffe oder deren Mischungen.

**2.** Thermoplastische Formmassen nach Anspruch 1, dadurch gekennzeichnet, daß sie

die Komponente A) in einer Menge von 50 bis 85 Gew.-%,
die Komponente B) in einer Menge von 5 bis 25 Gew.-%,
die Komponente C) in einer Menge von 5 bis 40 Gew.-%,
die Komponente D) in einer Menge von 4 bis 15 Gew.-%,
die Komponente E) in einer Menge von 0,01 bis 2 Gew.-%
die Komponente F) in einer Menge von 0 bis 2 Gew.-% und
die Komponente G) in einer Menge von 0,05 bis 30 Gew.-%, enthalten.

**3.** Thermoplastische Formmassen nach den Ansprüchen 1 bis 2, dadurch gekennzeichnet, daß als Komponente A) mindestens ein halogenfreies Polycarbonat auf der Basis von Dihydroxydiphenylcycloalkanen der allgemeinen Formel IV

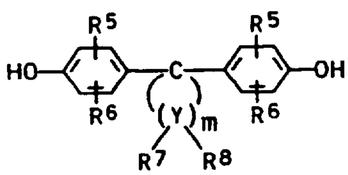

IV

in der die Substituenten und der Index die folgende Bedeutung haben:

$R^5$ und $R^6$ unabhängig voneinander Wasserstoffatome, halogenfreie $C_1$- bis $C_8$-Alkyl-, halogenfreie $C_5$- und $C_6$-Cycloalkylgruppen, halogenfreie $C_6$- bis $C_{10}$-Arylgruppen, die ein- bis zweifach durch $C_1$- bis $C_4$-Alkylgruppen substitituiert sein können oder halogenfreie $C_7$- bis $C_{12}$-Aralkylgruppen

Y Kohlenstoffatom

$R^7$ und $R^8$ für jedes Y individuell wählbar, unabhängig voneinander Wasserstoffatome oder $C_1$- bis $C_6$-Alkylgruppen

m eine ganze Zahl von 4 bis 7

eingesetzt wird.

**4.** Thermoplastische Formmassen nach den Ansprüchen 1 bis 3, dadurch gekennzeichnet, daß die Pfropfgrundlage $b_1$) aufgebaut ist aus einem vernetzten Butadienpolymeren.

**5.** Thermoplastische Formmassen nach den Ansprüchen 1 bis 3, dadurch gekennzeichnet, daß die Pfropfgrundlage $b_1$) aufgebaut ist aus

$b_{11}$) 70 bis 99,9 Gew.-% mindestens eines Alkylacrylats mit 1 bis 8 C-Atomen im Alkylrest

$b_{12}$) 0 bis 30 Gew.-% mindestens eines copolymerisierbaren monoethylenisch ungesättigten Monomeren und

$b_{13}$) 0,1 bis 5 Gew.-% eines copolymerisierbaren polyfunktionellen vernetzenden Monomeren.

**6.** Thermoplastische Formmassen nach den Ansprüchen 1 bis 3 und 5, dadurch gekennzeichnet, daß die Komponente B) aufgebaut ist aus

30 bis 70 Gew.-% eines grobteiligen Pfropfmischpolymerisats, das eine mittlere Teilchengröße von 200 bis 700 nm ($d_{50}$-Wert der integralen Masseverteilung) aufweist und 70 bis 30 Gew.-% eines feinteiligen Pfropfmischpolymerisats, das eine mittlere Teilchengröße von 50 bis 180 nm ($d_{50}$-Wert der integralen Masseverteilung) aufweist.

**7.** Verfahren zur Herstellung der thermoplastischen Formmassen gemäß den Ansprüchen 1 bis 6, dadurch gekennzeichnet, daß die Komponente E) einer wäßrigen Dispersion der Komponente B) zugegeben wird, diese Mischung gefällt, entwässert und getrocknet wird und anschließend die Komponenten A), C), D), F) und G) zu dieser Mischung gegeben werden.

**8.** Verfahren zur Herstellung der thermoplastischen Formmassen gemäß den Ansprüchen 1 bis 6, dadurch gekennzeichnet, daß die Komponente F) in Form einer wäßrigen Dispersion entweder

a) einer wäßrigen Dispersion der Komponente B) zugegeben wird, diese Mischung gefällt, entwässert und getrocknet wird oder

b) in die Schmelze der Komponente C) eingemischt wird, das Wasser entfernt wird

und anschließend die Komponenten A), C) oder B), D), E) und G) zugegeben werden.

**9.** Verwendung der thermoplastischen Formmassen gemäß den Ansprüchen 1 bis 6 zur Herstellung von Fasern, Folien und Formkörpern.

**10.** Formkörper, erhältlich aus den thermoplastischen Formmassen gemäß den Ansprüchen 1 bis 6.

## Claims

**1.** A chlorine- and bromine-free, flameproof thermoplastic molding material containing, as essential components,

A) from 40 to 85.99% by weight of one or more halogen-free polycarbonates,
B) from 5 to 25% by weight of one or more halogen-free graft polymers composed of

$b_1$) from 40 to 80% by weight of a grafting base consisting of an elastomeric polymer having a glass transition temperature below 0°C and
$b_2$) from 20 to 60% by weight of a graft consisting of

$b_{21}$) from 50 to 95% by weight of styrene or a substituted styrene of the formula I

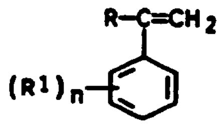

I

where R is alkyl of 1 to 8 carbon atoms or hydrogen, $R^1$ is alkyl of 1 to 8 carbon atoms and n is 0, 1, 2 or 3, or a mixture thereof, and

$b_{22}$) from 5 to 50% by weight of acrylonitrile, methacrylonitrile, methyl methacrylate, maleic anhydride or a mixture thereof,

C) from 5 to 40% by weight of a halogen-free, thermoplastic copolymer consisting of

$c_1$) from 50 to 95% by weight of styrene or a substituted styrene of the formula I or a mixture thereof and
$c_2$) from 5 to 50% by weight of acrylonitrile, methacrylonitrile, methyl methacrylate, maleic anhydride or a mixture thereof,

D) from 4 to 20% by weight of one or more halogen-free phosphorus compounds of the formula II

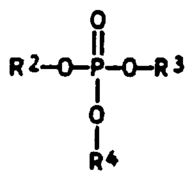

II

where $R^2$, $R^3$ and $R^4$ independently of one another are each halogen-free $C_1$-$C_8$-alkyl or halogen-free $C_6$-$C_{20}$-aryl which may be monosubstituted or disubstituted by $C_1$-$C_4$-alkyl,
E) from 0.01 to 5% by weight of one or more perfluoro- or polyfluoroalkanesulfonic acid or -carboxylic acid derivatives of the formula III

$$[F(CF_2-CF_2)_x(CH_2-CH_2)_y-X]_zM \qquad \text{III}$$

where

X is $-SO_3$ or -COO,
M is hydrogen or an alkali or alkaline earth metal atom,
x is an integer of from 1 to 6,
y is 0 or 1 and
z corresponds to the valency of M,

F) from 0 to 5% by weight of one or more tetrafluoroethylene polymers having a median particle size of from 0.05 to 20 µm and
G) from 0 to 40% by weight of fibrous or particulate fillers or a mixture thereof.

**2.** A thermoplastic molding material as claimed in claim 1, which contains

component A) in an amount of from 50 to 85% by weight,
component B) in an amount of from 5 to 25% by weight,
component C) in an amount of from 5 to 40% by weight,
component D) in an amount of from 4 to 15% by weight,
component E) in an amount of from 0.01 to 2% by weight,
component F) in an amount of from 0 to 2% by weight,
component G) in an amount of from 0.05 to 30% by weight,

**3.** A thermoplastic molding material as claimed in claim 1 or 2, wherein one or more halogen-free polycarbonates based on dihydroxydiphenylcycloalkanes of the formula IV

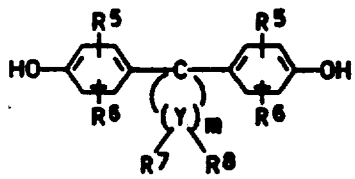

IV

where $R^5$ and $R^6$ independently of one another are each hydrogen, halogen-free $C_1$-$C_8$-alkyl, halogen-free $C_5$- or $C_6$-cycloalkyl, halogen-free $C_6$-$C_{10}$-aryl, which may be monosubstituted or disubstituted by $C_1$-$C_4$-alkyl, or halogen-free $C_7$-$C_{12}$-aralkyl, Y is a carbon atom, $R^7$ and $R^8$ can be selected individually for each Y and, independently of one another, are each hydrogen or $C_1$-$C_6$-alkyl and m is an integer of from 4 to 7, are used as component A.

**4.** A thermoplastic molding material as claimed in any of claims 1 to 3, wherein the grafting base $b_1$) is composed of a crosslinked butadiene polymer.

**5.** A thermoplastic molding material as claimed in any of claims 1 to 3, wherein the grafting base $b_1$) is composed of

$b_{11}$) from 70 to 99.9% by weight of one or more alkyl acrylates where the alkyl radical is of 1 to 8 carbon atoms,
$b_{12}$) from 0 to 30% by weight of one or more copolymerizable monoethylenically unsaturated monomers and
$b_{13}$) from 0.1 to 5% by weight of a copolymerizable polyfunctional crosslinking monomer.

**6.** A thermoplastic molding material as claimed in any of claims 1 to 3 and 5, wherein component B) is composed of 30 to 70% by weight of a coarse graft copolymer which has a median particle size of from 200 to 700 nm ($d_{50}$ value of the integral mass distribution) and from 70 to 30% by weight of a finely divided graft copolymer which has a median particle size of from 50 to 180 nm ($d_{50}$ value of the integral mass distribution).

**7.** A process for the preparation of a thermoplastic molding material as claimed in any of claims 1 to 6, wherein the component E) is added to an aqueous dispersion of the component B), this mixture is precipitated, dewatered and dried and the components A), C), D), F) and G) are then added to this mixture.

**8.** A process for the preparation of a thermoplastic molding material as claimed in any of claims 1 to 6, wherein the component F), in the form of an aqueous dispersion, either

a) is added to an aqueous dispersion of the component B) and this mixture is precipitated, dewatered and dried, or
b) is mixed into the melt of the component C) and the water is removed,

and then the components A), C) or B), D), E) and G) are added.

**9.** The use of a thermoplastic molding material as claimed in any of claims 1 to 6 for the production of fibers, films and moldings.

**10.** A molding obtainable from a thermoplastic molding material as claimed in any of claims 1 to 6.

**Revendications**

**1.** Masses à mouler thermoplastiques ignifugées exemptes de chlore et de brome, contenant en tant que composants essentiels

A) 40 à 85,99% en poids d'au moins un polycarbonate exempt d'halogène,
B) 5 à 25% en poids d'au moins un polymère greffé exempt d'halogène, composé de

$b_1$) 40 à 80% en poids d'une base de greffage en un polymère caoutchouteux ayant une température de transition vitreuse inférieure à 0°C,
$b_2$) 20 à 60% en poids d'une enveloppe greffée composée de

$b_{21}$) 50 à 95% en poids de styrène, de styrènes substitués de formule générale I

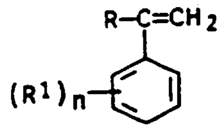

I

dans laquelle R représente un reste alkyle à 1-8 atomes de carbone ou un atome d'hydrogène et $R^1$ représente un reste alkyle à 1-8 atomes de carbone, n ayant la valeur 0, 1, 2 ou 3, ou de mélanges de ceux-ci et

$b_{22}$) 5 à 50% en poids d'acrylonitrile, de méthacrylonitrile, de méthacrylate de méthyle, d'anhydride maléique ou de mélanges de ceux-ci,

C) 5 à 40% en poids d'un copolymère thermoplastique exempt d'halogène, composé de

$c_1$) 50 à 95% en poids de styrène, de styrènes substitués de formule générale I ou de mélanges de ceux-ci,

$c_2$) 5 à 50% en poids d'acrylonitrile, de méthacrylonitrile, de méthacrylate de méthyle, d'anhydride maléique ou de mélanges de ceux-ci,

D) 4 à 20% en poids d'au moins un composé du phosphore exempt d'halogène de formule générale II

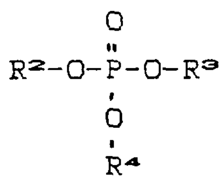

II

dans laquelle

$R^2$, $R^3$, $R^4$ représentent, indépendamment les uns des autres, des groupements alkyle en $C_1$-$C_8$ exempts d'halogène ou des groupements aryle en $C_6$-$C_{20}$ exempts d'halogène qui peuvent être substitués une ou deux fois par des groupements alkyle en $C_1$-$C_4$,

E) 0,01 à 5% en poids d'au moins un dérivé d'acide perfluoro- ou polyfluoroalcanesulfonique ou d'acide perfluoro- ou polyfluoroalcanecarboxylique de formule générale III

$$[F(CF_2-CF_2)_x(CH_2-CH_2)_y-X]_zM \qquad III$$

dans laquelle les substituants, et indices ont les significations suivantes:

X -$SO_3$ ou -COO,
M tome d'hydrogène, atome de métal alcalin ou alcalino-terreux,
x nombre entier de 1 à 6,
y 0 ou 1 et
z correspond à la valence de M,

F) 0 à 5% en poids d'au moins un polymère de tétrafluoroéthylène ayant une grosseur moyenne de particules de 0,05 à 20 µm,

G) 0 à 40% en poids de charges fibreuses, de charges particulaires ou de mélanges de celles-ci.

**2.** Masses à mouler thermoplastiques selon la revendication 1, caractérisées en ce qu'elles contiennent

le composant A) dans une proportion de 50 à 85% en poids,
le composant B) dans une proportion de 5 à 25% en poids,
le composant C) dans une proportion de 5 à 40% en poids,
le composant D) dans une proportion de 4 à 15% en poids,
le composant E) dans une proportion de 0,01 à 2% en poids,
le composant F) dans une proportion de 0 à 2% en poids et
le composant G) dans une proportion de 0,05 à 30% en poids.

**3.** Masses à mouler thermoplastiques selon la revendication 1 ou 2, caractérisées en ce que l'on utilise, comme composant A), au moins un polycarbonate exempt d'halogène à base de dihydroxydiphénylcycloalcanes de formule générale IV

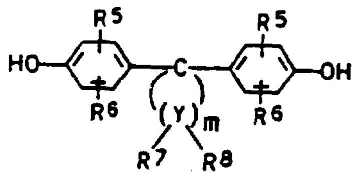

IV

dans laquelle les substituants et l'indice ont les significations suivantes:

$R^5$ et $R^6$ représentent, indépendamment l'un de l'autre, des atomes d'hydrogène, des groupements alkyle en $C_1$-$C_8$ exempts d'halogène, des groupements cycloalkyle en $C_5$-$C_6$ exempts d'halogène, des groupements aryle en $C_6$-$C_{10}$ exempts d'halogène qui peuvent être substitués une ou deux fois par des groupements alkyle en $C_1$-$C_4$, ou des groupements aralkyle en $C_7$-$C_{12}$ exempts

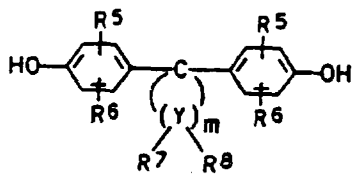

IV

d'halogène,

Y représente un atome de carbone,

$R^7$ et $R^8$ peuvent être choisis individuellement pour chaque reste Y et représentent, indépendamment l'un de l'autre, des atomes d'hydrogène ou des groupements alkyle en $C_1$-$C_6$,

m est un nombre entier de 4 à 7.

**4.** Masses à mouler thermoplastiques selon l'une quelconque des revendications 1 à 3, caractérisées en ce que la base de greffage $b_1$) est composée d'un polymère de butadiène réticulé.

**5.** Masses à mouler thermoplastiques selon l'une quelconque des revendications 1 à 3, caractérisées en ce que la base de greffage $b_1$) est composée de

$b_{11}$) 70 à 99,9% en poids d'au moins un acrylate d'alkyle à 1-8 atomes de carbone dans le reste alkyle,
$b_{12}$) 0 à 30% en poids d'au moins un monomère copolymérisable à insaturation monoéthylénique et
$b_{13}$) 0,1 à 5% en poids d'un monomère réticulant polyfonctionnel copolymérisable.

**6.** Masses à mouler thermoplastiques selon l'une quelconque des revendications 1 à 3 et 5, caractérisées en ce que le composant B) est composé de 30 à 70% en poids d'un copolymère greffé en grosses particules qui présente une grosseur moyenne de particules de 200 à 700 nm (valeur $d_{50}$ de la distribution de masses intégrale), et de 70 à 30% en poids d'un copolymère greffé en fines particules qui présente une grosseur moyenne de particules de 50 à 180 nm (valeur $d_{50}$ de la distribution de masses intégrale).

**7.** Procédé de préparation des masses à mouler thermoplastiques selon l'une quelconque des revendications 1 à 6, caractérisé en ce que le composant E) est ajouté à une dispersion aqueuse du composant B), ce mélange est précipité, déshydraté et séché, puis les composants A), C), D), F) et G) sont ajoutés à ce mélange.

**8.** Procédé de préparation des masses à mouler thermoplastiques selon l'une quelconque des revendications 1 à 6, caractérisé en ce qu'ou bien le composant F), sous la forme d'une dispersion aqueuse,

a) est ajouté à une dispersion aqueuse du composant B), ce mélange est précipité, déshydraté et séché, ou bien
b) il est incorporé dans la masse fondue du composant C), l'eau est éliminée,

puis les composants A), C) ou B), D), E) et G) sont ajoutés.

**9.** Utilisation des masses à mouler thermoplastiques selon l'une quelconque des revendications 1 à 6 pour la fabrication de fibres, de feuilles et de corps moulés.

**10.** Corps moulés, obtenus à partir des masses à mouler thermoplastiques selon l'une quelconque des revendications 1 à 6.